(19) Europäisches Patentamt
European Patent Office
Office européen des brevets

(11) **EP 2 408 589 B1**

(12) **EUROPÄISCHE PATENTSCHRIFT**

(45) Veröffentlichungstag und Bekanntmachung des Hinweises auf die Patenterteilung:
**23.01.2013 Patentblatt 2013/04**

(21) Anmeldenummer: **09779156.0**

(22) Anmeldetag: **16.03.2009**

(51) Int Cl.:
***B23P 15/00*** *(2006.01)*      ***B23P 19/06*** *(2006.01)*

(86) Internationale Anmeldenummer:
**PCT/EP2009/053064**

(87) Internationale Veröffentlichungsnummer:
**WO 2010/105661 (23.09.2010 Gazette 2010/38)**

(54) **VERFAHREN ZUM DETEKTIEREN VON FREMDKÖRPERN BEIM FÜGEN MINDESTENS ZWEIER KOMPONENTEN EINES BAUTEILS, SOWIE FÜGESYSTEM**

METHOD FOR DETECTING FOREIGN BODIES DURING THE ASSEMBLY OF AT LEAST TWO COMPONENTS OF A UNIT, AND JOINING SYSTEM

PROCÉDÉ POUR DÉTECTER DES CORPS ÉTRANGERS LORS DE L'ASSEMBLAGE D'AU MOINS DEUX COMPOSANTS D'UNE PIÈCE, ET SYSTÈME D'ASSEMBLAGE ASSOCIÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**25.01.2012 Patentblatt 2012/04**

(73) Patentinhaber: **Alfing Kessler Sondermaschinen GmbH**
**73433 Aalen (DE)**

(72) Erfinder: **WISNIEWSKI, Horst**
**73433 Aalen (DE)**

(74) Vertreter: **HOFFMANN EITLE**
**Patent- und Rechtsanwälte**
**Arabellastrasse 4**
**81925 München (DE)**

(56) Entgegenhaltungen:
DE-T5-112006 002 937     JP-A- 2001 162 548
JP-A- 2003 311 553     JP-A- 2007 260 905

EP 2 408 589 B1

**Beschreibung**

Technisches Gebiet

Die vorliegende Erfindung betrifft ein Verfahren zum Detektieren von Fremdkörpern, insbesondere von Einschlüssen, Partikeln und/oder Verunreinigungen beim, Fügen zweier bruchgetrennter Komponenten zu einem Bauteil an einer Trennfläche. Die vorliegende Anmeldung betrifft weiterhin ein Fügesystem zur Durchführung des genannten Verfahrens sowie eine Schraubervorrichtung mit einer Schraubersteuerung, welche das genannte Verfahren durchführt.

Hintergrund der Erfindung

Beim Fügen von zwei Komponenten eines Bauteils kann es zum einen bezüglich der Festigkeit der Fügeverbindung und zum anderen bezüglich weiterer späterer Montageschritte nachteilig sein, wenn zwischen den zwei zu fügenden Komponenten des Bauteils Fremdkörper vorhanden sind, insbesondere Einschlüsse, Partikel und/oder Verunreinigungen.

Dies ist insbesondere im Bereich des Fügens des Deckels und des Schafts eines Bruchpleuels (Crack-Pleuels) oder beim Fügen des Deckels und des unteren Teils einer Bruchkreuzgelenkgabel von Belang, da insbesondere bei den Bruchtrennverfahren Fremdkörper, insbesondere Einschlüsse oder Partikel, auf den jeweiligen Trennflächen verbleiben können. In einem möglichen Fall werden die Partikel durch das erstmalige Verschrauben bzw. Fügen der beiden Komponenten von der Trennfläche gelöst, so dass sie in einem nachfolgenden Bearbeitungsschritt, beispielsweise beim erneuten Öffnen des Bruchpleuels zur Endmontage, beispielsweise um es mit der Kurbelwelle zu verbinden, aus dem Pleuel herausfallen. Wenn jedoch Partikel oder andere Fremdkörper bei der Endmontage aus den jeweiligen Trennflächen herausfallen und in der jeweiligen Montageumgebung, beispielsweise in einem Motor, verbleiben, kann dies zu Schäden insbesondere an den Lagern im Motor führen.

Daher wurden bislang unterschiedliche Verfahren angewendet, mittels derer die Fremdkörper von den Trennflächen entfernt werden können. In dieser Hinsicht können insbesondere das Abbürsten, das Ausblasen, die Fluidbehandlung und/oder das Rütteln der jeweiligen Komponenten genannt werden. Eine Endkontrolle der gereinigten Trennflächen wird dann visuell durchgeführt, kann aber aufgrund der verfahrensbedingten, stark unterschiedlichen Topographien der Bruchtrennflächen nicht automatisiert werden.

Als weiterer Stand der Technik ist das Dokument JP 2001-162548 A zu nennen, das ein Verfahren zum Detektieren von Fremdkörpern beim Fügen zweier Komponenten zu einem Bauteil offenbart, umfassend die Schritte

- Fügen der Komponenten
- Aufnehmen der Fügekraft/Weg-Kennlinie beim Fügen
- Vergleich der Fügekraft/Weg-Kennlinie mit einer Referenzkennlinie
- Auslösen eines Schritts zum Entternen der Fremdkörper und/oder zum Ausgeben einer Meldung bei Feststellung einer Abweichung der beim Fügen aufgenommenen Fügekraft/Weg-Kennlinie von der Referenzkennlinie.

Beschreibung

Ausgehend von dem oben geschilderten technischen Hintergrund stellt sich als Aufgabe der vorliegenden Erfindung, ein Verfahren zum Detektieren von Fremdkörpern, insbesondere von Einschlüssen, Partikeln oder Verunreinigungen beim Fügen mindestens zweier Komponenten eines Bauteils bereitzustellen, welches eine zuverlässigere Detektion der jeweiligen Fremdkörper sowie eine Automatisierbarkeit ermöglicht.

Eine weitere Aufgabe ist es, ein entsprechendes Fügesystem zur Durchführung des Verfahrens bereitzustellen.

Ein solches Verfahren zum Detektieren von Fremdkörpern, insbesondere von Einschlüssen, Partikeln und/oder Verunreinigungen beim Fügen mindestens zweier Komponenten wird im Anspruch 1 vorgeschlagen. Insbesondere werden die Komponenten des Bauteils durch das Aufbringen einer Fügekraft gefügt, wobei eine Fügekraft/Weg-Kennlinie beim Fügen aufgenommen wird. Zumindest Bereiche dieser Fügekraft/Weg-Kennlinie werden dann mit einer vorbestimmten Referenzkurvenschar verglichen und entsprechend der jeweiligen Abweichung wird das Vorliegen eines Fremdkörpers erkannt oder die Abwesenheit eines Fremdkörpers bestätigt.

Dem Verfahren liegt die Erkenntnis zugrunde, dass der Verlauf der Fügekraft über den Fügeweg hinweg beim Fügen der beiden Komponenten von der jeweiligen Oberflächenbeschaffenheit, insbesondere der Beschaffenheit der Trennflächen der beiden Komponenten, abhängt. Durch Versuche seitens der Anmelderin wurde herausgefunden, dass insbesondere im Bereich der bruchgetrennten Bauteile an den Trennflächen nicht nur lose Partikel vorliegen, sondern auch Partikel, die noch mit der eigentlichen Komponente verbunden sind und welche durch den Bruchtrennvorgang lediglich aufgebogen/hochgebogen sind. Diese aufgebogenen, noch mit der Komponente verbundenen Partikel werden teilweise beim erstmaligen Fügen der beiden Komponenten nach dem Bruchtrennen wiederum in ihre ursprüngliche Position zurückgebogen und können dabei vollständig ausbrechen, so dass sich beim erneuten Öffnen der beiden Komponenten, beispielsweise um ein Bruchpleuel an der Kurbelwelle eines Motors oder eines Kompressors zu befestigen, aus der entsprechenden Trennfläche herausfallen.

Die Anmelderin hat herausgefunden, dass die aufzuwendende Fügekraft über den Fügeweg hinweg mit der Oberflächenbeschaffenheit der jeweiligen Fügeflächen bzw. Trennflächen der Komponenten korreliert.

Wenn also ein Fremdkörper, insbesondere ein abgeplatzter loser Partikel oder ein noch mit einer der Komponenten verbundener Partikel auf der jeweiligen Trennfläche vorhanden ist, verläuft die Fügekraft/Weg-Kennlinie am Anfang flacher, da ein einzelner Partikel immer weniger steif ist, als die gesamte Fügefläche.

Beim Fügen von zwei vollständig fremdkörperfreien Fügeflächen weist jedoch die Fügekraft/Weg-Kennlinie einen weitgehend linearen Verlauf mit einer im Wesentlichen konstanten Steigung auf, zumindest bis zur Fließgrenze. Beim Vorliegen eines Fremdkörpers auf der Fügefläche hingegen verläuft die Fügekraft/Weg-Kennlinie zunächst flacher und steigt dann später steiler an, so dass die Steigung im anfänglichen Wegbereich des Fügevorgangs geringer ist, als zum Ende des Fügevorgangs hin.

Durch das vorgeschlagene Verfahren kann nun aufgrund eines Vergleichs der Fügekraft/Weg-Kennlinie beim Fügen der beiden Bauteile mit einer Referenzkurvenschar bestimmt werden, ob die jeweiligen Fügeflächen, insbesondere die Trennflächen der beiden gefügten Bauteile, sauber waren, oder ob hier Fremdkörper, insbesondere Einschlüsse, Partikel und/oder Verunreinigungen auf einer oder beiden der Fügeflächen vorhanden waren, und entsprechend die Fügekraft/Weg-Kennlinie beim Fügen von der vorgegebenen Referenzkurvenschar abweicht. Sollte eine solche Abweichung festgestellt werden, so kann das gefügte Bauteil einer separaten Behandlung unterzogen werden, mittels derer der Fremdkörper entfernt wird.

Zum Vergleich wird der beim Fügen bestimmten Fügekraft/Weg-Kennlinie mit der Referenzkurvenschar zumindest ein erster Gradient aus Fügekraft und Weg an mindestens einem ersten Messpunkt, und mindestens ein zweiter Gradient aus Fügekraft und Weg an einem zweiten Messpunkt, welcher sich von dem ersten Messpunkt unterscheidet, bestimmt.

Ferner wird dann der Quotient aus den Gradienten gebildet und der Quotient mit einem sich aus der Referenzkurvenschar ergebenden bestimmten Gradienten-Wertebereich, insbesondere unter Einschluss eines vorbestimmten Toleranzbereiches, verglichen. Auf diese Weise kann der Vergleich zwischen der im aktuellen Fügevorgang gemessenen Fügekraft/Weg-Kennlinie und der Referenzkurvenschar vereinfacht werden, da hier nur ein eindimensionaler Wert verglichen werden muss.

Die Festlegung des ersten Messpunkts sowie des zweiten Messpunkts kann entweder automatisiert (beispielsweise nach 20% Anstieg der maximalen Fügekraft und nach 80% Anstieg der maximalen Fügekraft), oder aber manuell aufgrund experimenteller Vorerfahrung festgelegt werden.

In einer bevorzugten Variante wird die Fügekraft zwischen zwei Komponenten, insbesondere zwischen zwei Komponenten eines bruchgetrennten Bauteils wie dem Deckel und dem Schaft eines Bruchpleuels oder dem Deckel und dem unteren Teil einer Bruchkreuzgelenkgabel, durch Verschrauben aufgebracht. Beim Verschrauben wird dann als die Fügekraft/Weg-Kennlinie eine Drehmoment-/Drehwinkelkennlinie aufgenommen. Entsprechend kann aus der Drehmoment-/Drehwinkelkennlinie wiederum ein erster Gradient an einem ersten Messpunkt und ein zweiter Gradient an einem zweiten Messpunkt aufgenommen werden, und der aus diesen beiden Gradienten gebildete Quotient kann mit einem vorbestimmten Wertebereich verglichen werden.

In einer weiteren Variante kann die Fügekraft mittels einer Pressvorrichtung aufgebracht werden, wobei der Weg in der Fügekraft/Weg-Kennlinie insbesondere relativ zu der Fügefläche gemessen wird.

Vorteilhaft wird die Referenzkurvenschar bzw. der aus dieser Referenzkurvenschar bestimmte Wertebereich durch Messungen an dem gleichen Bauteiltypus, ohne das Vorliegen von Fremdkörpern, bestimmt. Dabei kann die Referenzkurvenschar, und insbesondere der vorbestimmte Wertebereich, einen über die empirisch ermittelten Kurven bzw. Werte hinausgehenden Toleranzbereich umfassen. Auf diese Weise kann erreicht werden, dass für jeden Bauteiltypus, beispielsweise für unterschiedlich große Bruchpleuel oder unterschiedlich große Bruchkreuzgelenkgabeln, jeweils eine optimale Referenzkurvenschar bzw. ein optimaler vorbestimmter Wertebereich festgelegt werden kann, so dass eine zuverlässige Detektion von Fremdkörpern erfolgen kann.

In einer weiteren vorteilhaften Ausprägung des Verfahrens wird die Fügekraft mittels einer Schraubvorrichtung auf Schrauben aufgebracht, welche die Komponenten des bruchgetrennten Bauteils wieder miteinander verbinden sollen. Die Schraubvorrichtung gibt dabei eine Drehmoment-/Drehwinkelkennlinie an eine Auswertevorrichtung aus, welche wiederum die Bewertung, ob an der Fügefläche, insbesondere der Trennfläche, der miteinander verschraubten Komponenten ein Fremdkörper vorliegt, übernimmt.

In einem weiteren bevorzugten Verfahrensschritt kann, wenn die Bewertung ergibt dass die im aktuellen Fügevorgang gemessene Fügekraft/Weg-Kennlinie außerhalb der durch die Referenzkurvenschar vorgegebenen Bereichs liegt, die Fügeverbindung wiederum gelöst werden, der Fremdkörper an der jeweiligen Fügefläche entfernt werden, und die beiden Komponenten dann wiederum gefügt werden, vorteilhaft wiederum unter Anwendung des bereits beschriebenen Detektionsverfahrens. Hierdurch kann erreicht werden, dass kein Bauteil die Fügestation verlässt, welches an seiner Fügefläche noch mit einem Fremdkörper verunreinigt ist.

Insbesondere wiederholtes Durchführen des Verfahrens des Lösens der Fügeverbindung und des erneuten Fügens unter Durchführen des Detektionsverfahrens hat zur Folge, dass sämtliche relevanten Fremdkörper detektiert werden können. Selbstverständlich gibt es auch die Möglichkeit, nach einigen Iterationsschritten die zu fügenden Komponenten bzw. das Bauteil zu verwerfen.

Durch Rütteln der Komponenten, Ausblasen, Bürsten, Fluidbehandlung oder manuelle Entfernung können die in dem Detektionsverfahren festgestellten Fremdkörper entfernt werden.

Bevorzugt wird der Gradient am Anfang und am Ende der jeweiligen Fügekraft/Weg-Kennlinie, und insbesondere der Drehmoment-/Drehwinkelkennlinie bestimmt. Hierdurch kann besonders zuverlässig festgestellt werden, ob die jeweilige gemessene Kennlinie von dem typischen, quasi linearen Verlauf bei einer sauberen Fügefläche abweicht und einen im unteren Bereich flacheren und im oberen Bereich steileren Verlauf annimmt, also eine quasi hängende Kennlinie.

Als Komponenten eines zu fügenden Bauteils sind hier insbesondere der Schaft und der Deckel eines bruchgetrennten Pleuels oder der Deckel und der Gabelbereich einer bruchgetrennten Kreuzgelenkgabel vorgesehen.

Ein besonders effizienter Ablauf des Fügevorgangs ergibt sich, wenn zunächst die beiden Komponenten gerüttelt werden, dann die beiden Komponenten miteinander gefügt, insbesondere miteinander verschraubt werden, unter Verwendung des entsprechenden Detektionsverfahrens, und bei Detektion eines Fremdkörpers die Fügeverbindung gelöst wird, die beiden Komponenten wiederum gerüttelt werden und danach wiederum miteinander gefügt werden.

Die oben genannte Aufgabe wird weiterhin gelöst durch ein Fügesystem gemäß Anspruch 10 zur Durchführung des Verfahrens wie es bereits beschrieben wurde, wobei das Fügesystem eine Fügevorrichtung, welche eine Fügekraft/Weg-Kennlinie aufnimmt, und eine Auswertevorrichtung umfasst, welche die Fügekraft/Weg-Kennlinie, die von der Fügevorrichtung aufgenommen ist, auswertet. Die Auswertevorrichtung vergleicht dabei die aufgenommene Fügekraft/Weg-Kennlinie mit einer vorgegebenen Referenzkurvenschar und löst bei einer Abweichung der aufgenommenen Fügekraft/Weg-Kennlinie eine entsprechende Aktion aus und gibt insbesondere eine Meldung aus und/oder leitet einen separaten Bearbeitungsschritt ein. In dem Fügesystem wird als Fügevorrichtung bevorzugt eine Schraubvorrichtung gemäß Anspruch 12 verwendet, welche als die Fügekraft/Weg-Kennlinie eine Drehmoment-/Drehwinkelkennlinie aufnimmt und an die Auswertevorrichtung ausgibt.

Die Auswertevorrichtung des Fügesystems bestimmt erfindungsgemäß aus der Fügekraft/Weg-Kennlinie einen ersten Gradienten an einem ersten Messpunkt und einen zweiten Gradienten an einem zweiten Messpunkt, bestimmt den Quotienten aus den Gradienten und vergleicht diesen Quotienten mit einem vorbestimmten Wertebereich, um bei einer Abweichung von diesem Wertebereich ein Fremdkörperdetektionssignal auszugeben.

Kurze Beschreibung der Zeichnungen

Im Folgenden werden anhand der beigefügten Zeichnungen exemplarisch unterschiedliche Kennlinien diskutiert, anhand welcher das Detektionsverfahren beschrieben werden wird.

Dabei zeigen:

Figur 1     eine Drehmoment-/Drehwinkelkennlinie bei der ersten Verschraubung einer sauberen Fügefläche;

Figur 2     eine Drehmoment-/Drehwinkelkennlinie der der Figur 1 zugrunde liegenden Fügefläche bei der fünften Verschraubung;

Figur 3     eine Drehmoment-/Drehwinkelkennlinie einer Fügefläche, auf welcher ein 0,46 g schwerer Partikel aufgebracht ist, beim ersten Verschrauben;

Figur 4     eine Drehmoment-/Drehwinkelkennlinie der der Figur 3 zugrundeliegenden Fügefläche mit dem 0,46 g schweren Partikel beim vierten Verschrauben;

Figur 5     eine Drehmoment-/Drehwinkelkennlinie mit einer Fügefläche, auf der ein 0,17 g schwerer Partikel aufgebracht ist, bei der erstmaligen Verschraubung;

Figur 6     eine Drehmoment-/Drehwinkelkennlinie der der Figur 5 zugrunde liegenden Fügefläche mit dem 0,17 g schweren Partikel, bei der vierten Verschraubung;

Figur 7     eine Drehmoment-/Drehwinkelkennlinie einer Fügefläche mit einem 0,02 g schweren Partikel bei der ersten Verschraubung;

Figur 8      eine Drehmoment-/Drehwinkelkennlinie der der Figur 7 zugrundeliegenden Fügefläche mit dem 0,02 g schweren Partikel bei der vierten Verschraubung;

Figur 9      exemplarisch anhand eines implementierten Beispiels den Moment- und Gradientenverlauf beim Fügen zweier Komponenten beim Vorliegen eines 0,16 g schweren Partikels, sowie bei sauberer Fügefläche;

Figur 10      den Gradientenverlauf über dem Drehmoment in dem der Figur 9 zugrundeliegenden Beispiel mit einem 0,16 g schweren Partikel und mit sauberer Fügefläche; und

Figur 11      exemplarisch ein Bauteil in Form eines Bruchpleuels mit zwei Komponenten, nämlich dem Schaft und dem Deckel.

<u>Detaillierte Beschreibung der Ausführungsbeispiele</u>

Im Folgenden wird das Verfahren zum Detektieren von Fremdkörpern, insbesondere von Einschlüssen, Partikeln und/oder Verunreinigungen beim Fügen mindestens zweier Komponenten eines Bauteils in mehreren Beispielen beschrieben werden. Dabei bezeichnen in den jeweiligen Figuren gleiche Bezugszeichen gleiche bzw. ähnliche Elemente, um eine wiederholte Beschreibung der jeweiligen Elemente zu vermeiden.

Dem Verfahren liegt die Erkenntnis zu Grunde, dass der Verlauf der Fügekraft beim Fügen zweier Komponenten eines Bauteils über den Fügeweg hinweg charakteristische Merkmale aufweist, die von der Beschaffenheit und dem Zustand der jeweiligen Fügefläche abhängen. Insbesondere wurde erkannt, dass die Fügekraft/Weg-Kennlinie bei einer sauberen Fügefläche, also einer Fügefläche ohne Fremdkörper wie Partikel, Einschlüsse und/oder Verunreinigungen, zu einer im Wesentlichen linearen Fügekraft/Weg-Kennlinie mit einer im Wesentlichen konstanten Steigung führt.

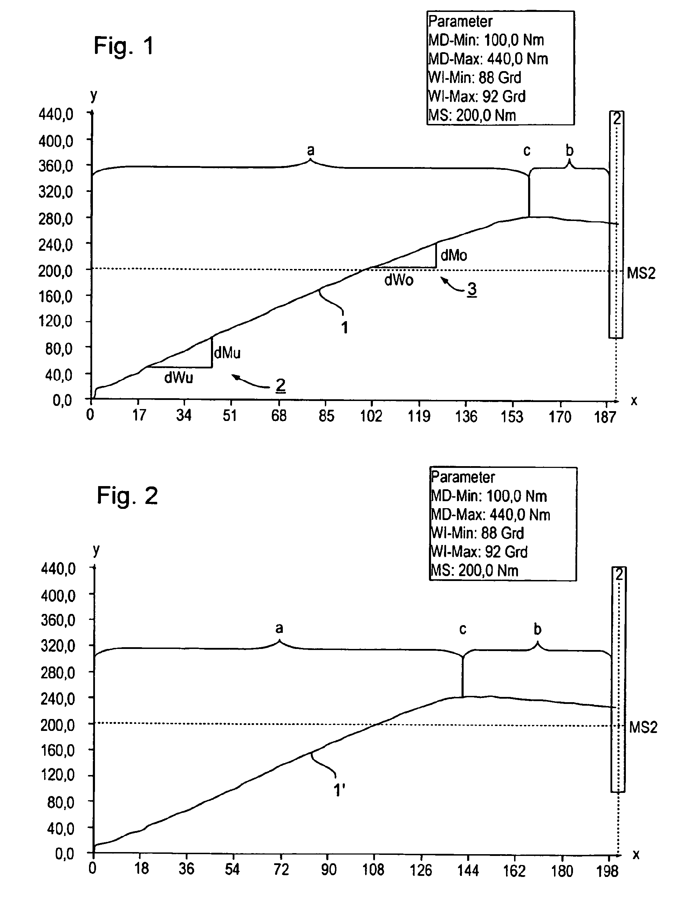

Eine solche Fügekraft/Weg-Kennlinie bei sauberen Fügeflächen ist im Folgenden in den Figuren 1 und 2 gezeigt, in welchen als die Fügekraft das von einer Schraubvorrichtung auf eine Verschraubung der zu fügenden Komponenten aufgebrachte Drehmoment aufgetragen ist, und als Weg bzw. Fügeweg der jeweilige Drehwinkel der Verschraubung aufgetragen ist.

Die in den Figuren 1 und 2 gezeigte Drehmoment-/Drehwinkelkennlinie wird beim Fügen zweier Komponenten eines Bauteils mittels Zusammenschrauben bei einer sauberen Fügefläche erreicht.

Figur 1 zeigt dabei die Drehmoment-/Drehwinkelkennlinie 1, wobei auf der X-Achse der Drehwinkel in Grad und auf der Y-Achse das Drehmoment in Nm aufgetragen ist.

Es ist klar zu erkennen, dass die Drehmoment-/Drehwinkelkennlinie in einem ersten Bereich a eine im Wesentlichen konstante Steigung aufweist und im Wesentlichen linear ausgebildet ist. Die Drehmoment-/Drehwinkelkennlinie zeigt dieses Verhalten im Wesentlichen bis zu der mit dem Referenzzeichen c angedeuteten Fließgrenze der zur Verschraubung der beiden Komponenten verwendeten Schrauben. Bei der Fließgrenze c erreicht das aufgebrachte Drehmoment sein Maximum. Von der Fließgrenze c ausgehend, ist im Bereich b ein anderes Verhalten zu detektieren, welches aus dem Fließen der Verschraubung resultier, welches aber für die folgenden Überlegungen zunächst keine Rolle spielt.

Figur 2 zeigt eine Drehmoment-/Drehwinkelkennlinie 1', welche an der gleichen Fügefläche aufgenommen ist wie die Drehmoment-/Drehewinkelkennlinie der Figur 1. Allerdings wurde die Fügefläche in Figur 2 bereits vier Mal verschraubt, so dass Figur 2 die Drehmoment-/Drehwinkelkennlinie bei der fünften Verschraubung zeigt.

Auch bei dieser fünften Verschraubung ist zumindest im Bereich a der Drehmoment-/Drehwinkelkennlinie, nämlich vor der Fließgrenze c, wiederum ein im Wesentlichen linearer Verlauf der Kennlinie zu finden und die Steigung ist im Wesentlichen über den gesamten Drehwinkelbereich hinweg konstant.

Aus dem Vergleich von Figur 1 und Figur 2 ist zu erkennen, dass bei einer sauberen Fügefläche die Drehmoment-/Drehwinkelkennlinie im Wesentlichen zueinander ähnlich ist und insbesondere im ersten, unteren Abschnitt a bis zur Fließgrenze c im Wesentlichen linear ist und im Wesentlichen eine konstante Steigung aufweist. Lediglich der Beginn der Fließgrenze c verschiebt sich bei mehrfachem Verschrauben in Richtung kleinerer Drehwinkel und kleinerer Drehmomente. Dies kann aber auch an den Versuchsbedingungen im vorliegenden Fall liegen, beispielsweise auch an einer Längung der Schraube, die dazu verwendet wurde die beiden Komponenten fünfmal miteinander zu verbinden, oder an einer Veränderung der entsprechenden Gewinde in den Komponenten.

In Figur 1 sind an zwei unterschiedlichen Messpunkten, die mit den Referenzzeichen 2 und 3 bezeichnet sind, jeweils die Gradienten dM/dW aufgezeichnet. An dem ersten Messpunkt 2 ist der untere Gradient $dMu/dWu$ aufgetragen und an dem zweiten Messpunkt 3 der obere Gradient $dMo/dWo$. Der obere Gradient $dMo/dWo$ liegt dabei in einem oberen Abschnitt des linearen Abschnitts a der Drehmoment-/Drehwinkelkennlinie 1, und der untere Gradient $dMu/dWu$ in einem unteren Abschnitt der Drehmoment-/Drehwinkelkennlinie a.

Es ist zu erkennen, dass der Gradient am Messpunkt 2 in etwa so groß ist wie der Gradient am Messpunkt 3. Entsprechend kann ein Quotient aus den beiden Gradienten gebildet werden wie folgt:

$$\texttt{Quotient = oberer Gradient / unterer Gradient}$$

Im vorliegenden Fall der sauberen Fügefläche, die der Drehmoment-/Drehwinkelkennlinie der Figur 1 zugrunde liegt, ist dieser Quotient ungefähr 1.

Auch in Figur 2 lassen sich die entsprechenden Gradienten und der entsprechende Quotient berechnen, wobei auch bei dieser Berechnung der Quotient zu ungefähr 1 ermittelt wird.

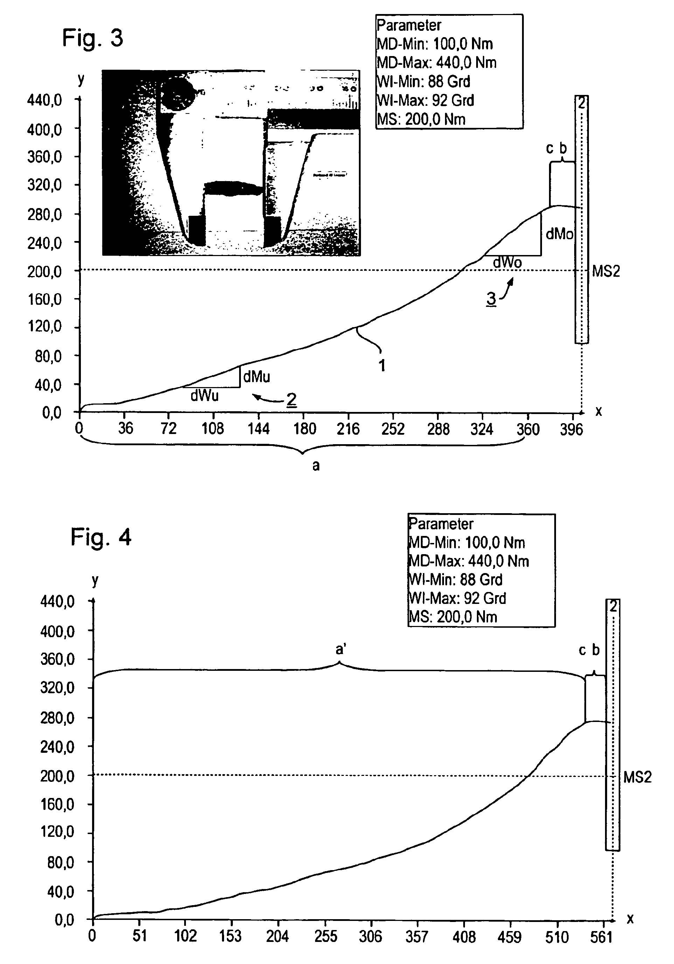

Die Figuren 3 und 4 zeigen die Drehmoment-/Drehwinkelkennlinie beim Fügen zweier Komponenten, zwischen deren Fügeflächen sich ein Partikel mit einer Masse von 0,46 g befindet, wobei Figur 3 die Kennlinie beim erstmaligen Verschrauben und Figur 4 die Kennlinie beim vierten Verschrauben zeigt.

Auch hier ist wiederum zu erkennen, dass die Kennlinie beim ersten Verschrauben (Figur 3) und die Kennlinie beim vierten Verschrauben (Figur 4) im Wesentlichen zueinander ähnlich sind, aber von der Charakteristik der Drehmoment-/Drehwinkelkennlinien aus den Figuren 1 und 2 deutlich abweichen.

Insbesondere sind die Drehmoment-/Drehwinkelkennlinien der Figuren 3 und 4 jeweils im unteren Bereich flacher als im oberen Bereich. Dies lässt sich unter anderem damit erklären, dass, wenn sich ein Partikel auf den Fügeflächen zwischen den beiden Komponenten befindet, die Drehmoment-/Drehwinkelkennlinie am Anfang flacher verlaufen muss, da ein Partikel deutlich weniger steif ist als die gesamte Fügefläche. Entsprechend ist die Kennlinie am Anfang flacher als im oberen Bereich, in welchem der Einfluss der gesamten Fügefläche immer größer und der Einfluss des einzelnen Partikels immer kleiner wird.

Interessant ist in diesem Zusammenhang auch die Erkenntnis, dass dieses Verhalten im Wesentlichen unabhängig von der Anzahl des mehrmalig hintereinander ausgeführten Verschraubens bzw. Fügens ist, zumindest bis zur vierten Verschraubung, welche in der Figur 4 gezeigt ist, hin.

Auch in diesen Figuren ist das Verhalten der Drehmoment-/Drehwinkelkennlinien so, dass die Kennlinien im Bereich a, a' bis zur Fließgrenze c hin im Wesentlichen zueinander ähnlich sind. Im Bereich der Fließgrenze und danach, also in den Bereichen c und b, ist das Verhalten ebenfalls ähnlich, spielt aber im Zusammenhang mit dem vorliegenden Verfahren zunächst keine Rolle.

Werden in Figur 3 wieder das Gradientendreieck dMu/dWu an der ersten Messposition 2 und das Gradientendreieck dMo/dWo an der zweiten Messposition 3 eingezeichnet und berechnet man die Gradienten und aus den Gradienten folgend den Quotienten des oberen Gradienten durch den unteren Gradienten, so wird man hier einen Wert erhalten, der deutlich über 1 liegt. Selbstverständlich kann auch der Quotient gebildet werden aus dem unteren Messwert bei Messposition 2 durch den oberen Messwert bei Messposition 3, so dass sich hier ein Quotient ergeben würde, der deutlich kleiner als 1 ist. Wesentlich ist nur, dass der Wert des Quotienten deutlich von 1, also dem aus der in den Figuren 1 und 2 dargestellten Referenzkurvenschar abgeleiteten Referenzwert, abweicht.

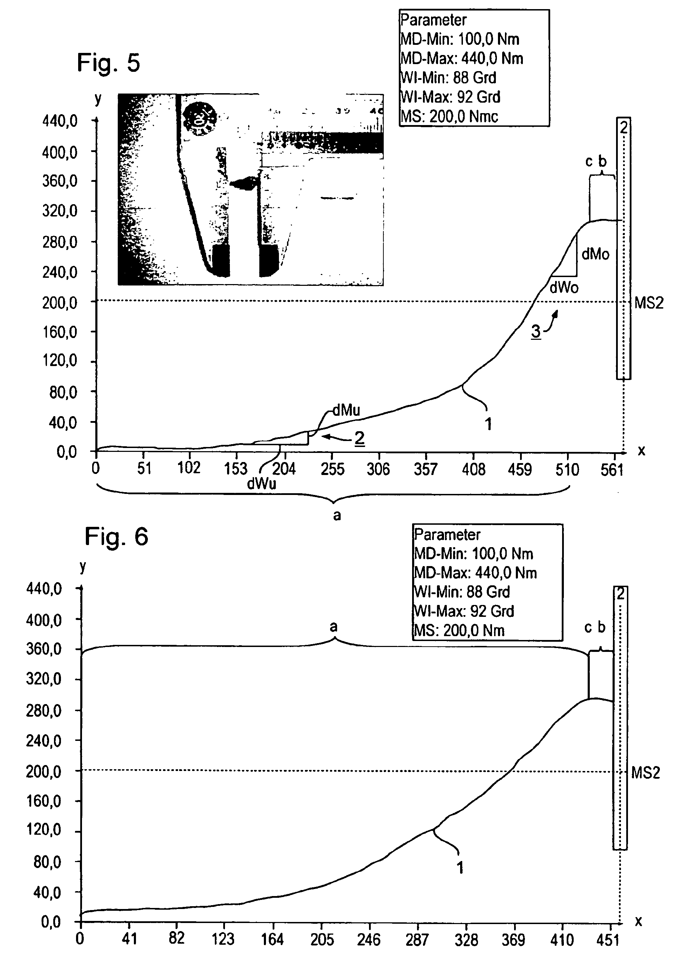

Ähnliche Verläufe ergeben sich aus den Figuren 5 und 6, bei denen das Fügen zweier Komponenten bei Vorliegen des Partikels mit 0,17 g Masse in der Fügefläche gezeigt wird, wobei in Figur 5 das erstmalige Verschrauben und in Figur 6 das vierte Verschrauben gezeigt ist.

Die Drehmoment-/Drehwinkelkennlinien sind jedoch wieder zwischen Figur 5 und Figur 6 ähnlich. Insbesondere ist auch hier zu erkennen, dass die Drehmoment-/Drehwinkelkennlinie im unteren Bereich wesentlich flacher verläuft, als in deren oberem Bereich. Entsprechend weicht der Quotient aus dem oberen Gradienten und dem unteren Gradienten wieder wesentlich von 1 ab.

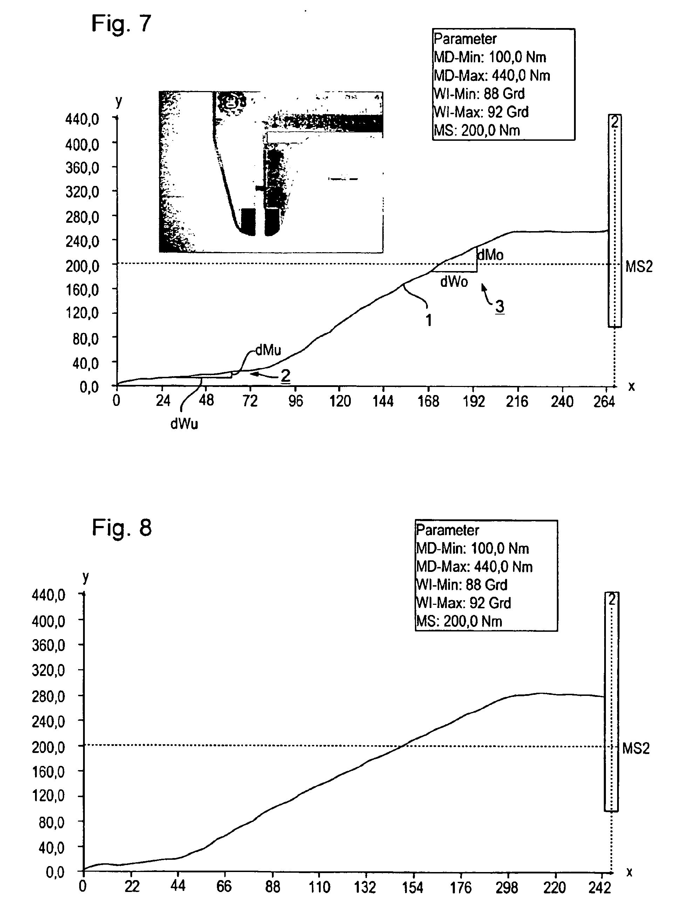

Die Figuren 7 und 8 zeigen wiederum das Fügen zweier Komponenten, diesmal bei Anwesenheit eines Partikels mit einer Masse von 0,02 g, wobei in Figur 7 die Kennlinie bei erstmaliger Verschraubung und in Figur 8 die Kennlinie bei der vierten Verschraubung gezeigt wird. Es ist wiederum klar erkennbar, dass im unteren Bereich die Kurve wesentlich flacher verläuft als in deren oberen Bereich.

Um die Begriffe "unterer Bereich" und "oberer Bereich" klarer fassen zu können und um sie automatisiert ermittelbar zu machen, kann beispielsweise vorgesehen werden, dass der untere Messpunkt nach 20% des maximal aufgebrachten Drehmoments, oder der maximal aufgebrachten Fügekraft, gesetzt wird, und der obere Messpunkt nach 80% der maximal aufgebrachten Fügekraft. Andere Möglichkeiten zum Setzen der jeweiligen Messpunkte sind selbstverständlich ebenfalls möglich. Einfach automatisierbar ist zumindest ein Verfahren, bei dem die Messpunkte für die jeweiligen Gradienten in Position eingebracht werden, die automatisch aus der Kennlinie unter Kenntnis der jeweiligen Parameter selbst bestimmt werden können.

Ausgehend von den oben dargestellten unterschiedlichen Drehmoment-/Drehwinkelkennlinien, einmal eines Fügevorganges bei sauberer Fügefläche (Figuren 1 und 2)und zum anderen von Fügevorgängen mit eingebrachten kleinen Partikeln auf der jeweiligen Fügefläche (Figuren 3 bis 8) ist zu erkennen, dass durch einen einfachen Vergleich der jeweiligen Kennlinien mit einer vorgegeben Referenzkurvenschar herausgefunden werden kann, ob ein Partikel auf der jeweiligen Fügefläche vorliegt, oder aber nicht.

Eine solche Referenzkurvenschar kann beispielsweise durch experimentelles Arbeiten an unterschiedlichen Bauteilen des gleichen Typs ermittelt werden, wobei sichergestellt sein muss, dass die jeweiligen Fügeflächen absolut sauber sind.

Um die interne Berechnung zu vereinfachen, können auch nur zwei unterschiedliche Messpunkte 2, 3 festgelegt werden, beispielsweise im Bereich der unteren 20% der Kennlinie und im Bereich der oberen 80% der Kennlinie bis zur jeweiligen maximal aufgebrachten Fügekraft, jeweils die Steigungen/Gradienten an den entsprechenden Messpunkten berechnet werden und daraus ein Quotient gebildet wird. Wenn der Quotient nahe bei 1 ist, ist mit hoher Wahrscheinlichkeit kein Fremdkörper an der Fügefläche vorhanden. Ist der Quotient wesentlich kleiner als 1 oder wesentlich größer als 1, so liegt mit hoher Wahrscheinlichkeit ein Fremdkörper auf einer der Fügeflächen vor. Als Referenzkurvenschar dient hier also eine Schar von Kurven, die über den betrachteten Bereich hinweg im Wesentlichen die gleiche Steigung haben.

Eine Auswertevorrichtung, in welche der von der jeweiligen Fügevorrichtung gemessene bzw. bestimmte Datensatz der Fügekraft/Weg-Kennlinie bzw. der Drehmoment-/Drehwinkelkennlinie eingegeben wird, kann nun durch Berechnung des jeweiligen Quotienten aus dem oberen und dem unteren Gradienten bestimmen, ob sich auf der Fügefläche Fremdkörper befinden oder ob die Fügefläche sauber ist. Wenn die Fügefläche sauber ist, kann das gefügte Bauteil an die nächste Station übergeben werden. Ist an der Fügefläche ein Fremdkörper, insbesondere ein Partikel, vorhanden, so kann die entsprechende Auswertevorrichtung das gefügte Bauteil einer weiteren Behandlung unterziehen oder eine entsprechende Meldung ausgeben.

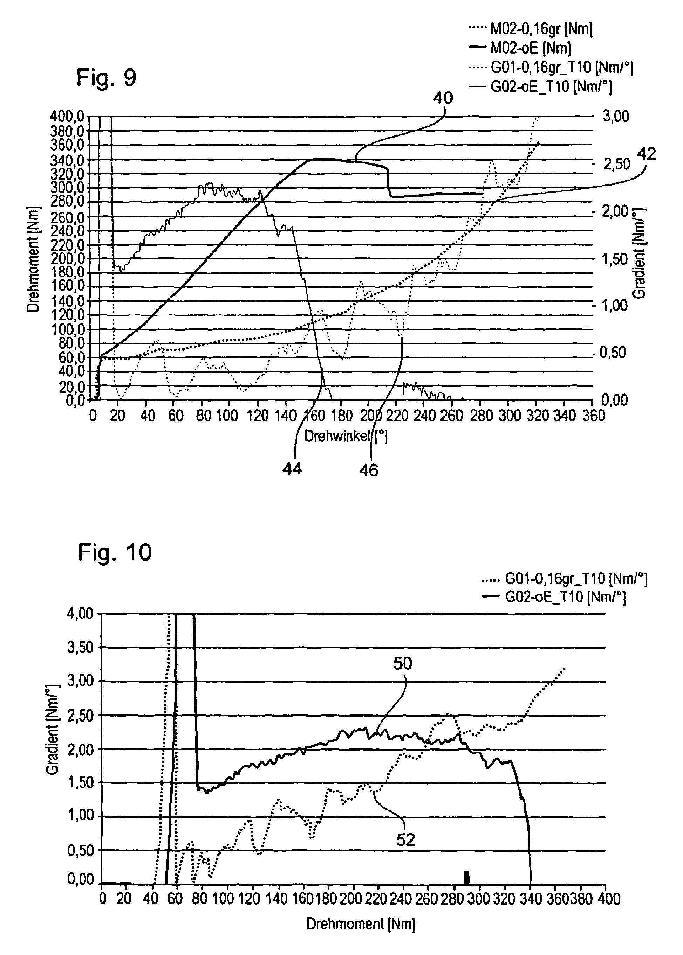

In einer Implementierung des Verfahrens ergeben sich die in Figur 9 gezeigten Momenten- und Gradientenverläufe. Dabei zeigt die durchgezogene Linie 40 den Momentenverlauf beim Fügen ohne Fremdkörper, die Kurve 42 den Momentenverlauf beim Fügen der beiden Komponenten bei Vorliegen eines Partikels von 0,16 g Masse, die Kurve 44 den Gradientenverlauf bei einer sauberen Fügefläche und die Kurve 46 den Gradientenverlauf bei Vorliegen des Partikels von 0,16 g Masse.

Die Implementierung zeigt deutlich, dass sich bei der sauberen Fügefläche 40 ein vollkommen anderer Gradientenverlauf 44 ergibt, als bei Vorliegen eines Partikels auf der Fügefläche. Entsprechend lässt sich auch aus diesem Momenten- bzw. Gradientenverlauf der Figur 9 das Vorliegen eines Partikels bzw. das Vorliegen einer sauberen Fügefläche ermitteln.

Figur 10 zeigt weiterhin den Gradientenverlauf über das Drehmoment, wobei die Kurve 50 den Gradientenverlauf über das Drehmoment bei sauberer Fügefläche und die Kurve 52 den Gradientenverlauf über das Drehmoment bei einer mit einem mit 0,16 g schweren Partikel versehenen Fügefläche zeigt. Auch hier ist klar zu erkennen, dass die Kurve 50 im Wesentlichen in einem sehr engen Bereich zwischen 1,5 und 2,0 Nm/° verläuft, wohin gehen die Kurve 52 zwischen 0 und 3,0 Nm/° deutlich variiert. Auch hieraus lässt sich das Vorliegen bzw. das Nichtvorliegen eines Fremdkörpers auf der Fügefläche schließen.

Bezüglich der Figur 10 ist anzumerken, dass der hohe Gradientenwert zu Beginn auf einen Startwert in der entsprechenden Steuerung der entsprechenden Schraubvorrichtung zurückzuführen ist, wobei als Startwert 60 Nm eingestellt waren, wodurch die Anfahrdifferenz groß war und, durch die eingestellte Mittelung über 10°, sich der hohe Wert über mehrere Newtonmeter hinweg durchgezogen hat.

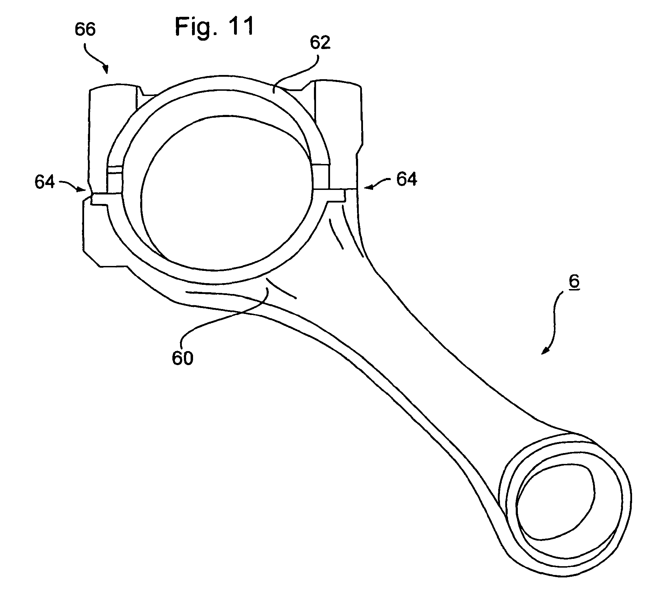

Figur 11 zeigt schematisch einen Bruchpleuel 6 mit einem Schaft 60 und einem Deckel 62. An der Fügefläche 64, die gleichzeitig die Trennfläche beim Bruchtrennen darstellt, können sich die oben beschriebenen Probleme bezüglich des Vorliegens von Fremdkörpern, Einschlüssen, Partikeln oder Verunreinigungen beim Bruchtrennen ergeben. Insbesondere kann passieren, dass Partikel an der Trennfläche aufgebogen werden, aber an der Trennfläche hängen bleiben, so dass sie beim Fügen des Deckels 62 mit dem Schaft 60 an der Fügefläche 64 mittels Schrauben 66 wieder zurückgebogen werden und sich vielleicht erst beim zweiten oder dritten Lösen des Deckels 62 von dem Schaft 60 vollständig von der Trennfläche lösen, so dass sie durch Rütteln oder Ausblasen entfernbar wären. Das oben beschriebene Verfahren ermöglicht es nun, festzustellen, ob solche fest hängenden Partikel vorhanden sind. Diese Detektion kann während des Fügens, also während des Eindrehens der Schrauben 66 zum Fügen des Deckels 62 auf den Schaft 60 durchgeführt werden.

Alles in allem ergibt sich auf diese Weise ein Verfahren, welches es während des Fügens des Deckels mit dem Schaft, beispielsweise eines Bruchpleuels oder eines jeglichen anderen bruchgetrennten oder anderen Bauteils, ermöglicht festzustellen, ob sich auf der Fügefläche oder in der Fügefläche Fremdköper, insbesondere Einschlüsse, Partikel, Verunreinigungen oder andere Fremdkörper befinden. Entsprechend können auf Grundlage dieser Detektion Maßnahmen getroffen werden, mittels derer die entsprechenden Fremdkörper von der Fügefläche entfernt werden können, oder bei Scheitern der Maßnahmen das entsprechende Bauteil aussortiert werden kann. Auf diese Weise kann eine sehr hohe Qualität der Fügeverbindungen sichergestellt werden und gleichzeitig verhindert werden, dass beim Öffnen einer solchen Fügeverbindung und dem anschließenden erneuten Fügen, beispielsweise um einen Bruchpleuel auf eine Kurbelwelle aufzubringen, Partikel freigesetzt werden, die beispielsweise in einem Motor Schaden anrichten könnten.

Entsprechend kann das Detektionsverfahren bei Detektion eines Fremdkörpers, Einschlusses, Partikels oder einer Verunreinigung entsprechende Maßnahmen auslösen.

Beispielsweise kann eine entsprechende Meldung ausgegeben werden, so dass die Komponenten des Bauteils wieder gelöst werden, und der Fremdkörper manuell von der Fügefläche entfernt wird. In einer weitern Variante kann das Verfahren das Bauteil einer separaten Behandlung unterziehen, beispielsweise ein automatisches Lösen der Komponenten, anschließendes Entfernen der Fremdkörper, beispielsweise durch Rütteln der Komponenten, Aneinanderschlagen der Komponenten, Ausblasen der Fügefläche mit Druckluft oder einer anderen Fluidbehandlung, Ausbürsten oder ein anderer mechanischer Prozess zum Entfernen der Fremdkörper aus den Fügeflächen, und erneutes Fügen der beiden Komponenten zu dem Bauteil.

Die Fügekraft wird dabei bevorzugt mittels eines Schraubers oder einer anderen Schraubvorrichtung auf die Schrauben aufgebracht, welche das Fügen der beiden Komponenten des Bauteils übernehmen. Der Schrauber kann dabei die Drehmoment-/Drehwinkelkennlinie an eine Auswertungsvorrichtung ausgeben, welche dann die entsprechende Auswertung der Drehmoment-/Drehwinkelkennlinie übernimmt.

In einer weiteren Variante kann die Fügekraft mittels einer Pressvorrichtung auf die beiden Komponenten aufgebracht werden, wobei die Pressvorrichtung die aufgebrachte Fügekraft ausgibt und der zurückgelegte Fügeweg relativ zu der Fügefläche gemessen wird. Auf diese Weise kann ebenso beim Fügen mittels einer Pressvorrichtung festgestellt werden, ob sich auf der Fügefläche ein Fremdkörper, insbesondere ein Einschluss, ein Partikel, eine Verunreinigung oder irgendwelche andere Fremdkörper befinden, oder ob es sich um eine saubere Fügefläche handelt.

**Patentansprüche**

1.  Verfahren zum Detektieren von Fremdkörpern, insbesondere von Einschlüssen, Partikeln und/oder Verunreinigungen, beim Fügen zweier bruchgetrennter Komponenten (60, 62) zu einem Bauteil (6) an einer Trennfläche, mit den Schritten:

    - Fügen der Komponenten durch Aufbringen einer Fügekraft;
    - Aufnehmen der Fügekraft/Weg-Kennlinie beim Fügen;
    - Vergleichen der Fügekraft/Weg-Kennlinie mit einer Schar von Referenzkennlinien, insbesondere unter Einschluss eines Toleranzbereichs, wobei beim Vergleichen an einem ersten Messpunkt (2) ein erster Fügekraft-/Weggradient (dMu/dWu) bestimmt wird und an einem zweiten Messpunkt (3) ein zweiter Fügekraft-/Weggradient (dMo/dWo) bestimmt wird, dann ein Quotient aus den Gradienten gebildet wird und der Quotient mit einem aus der Referenzkurvenschar bestimmten Referenzwertebereich verglichen wird;
    - Auslösen eines Schritts zum Entfernen der Fremdköper und/oder zum Ausgeben einer Meldung bei Feststellung einer Abweichung der beim Fügen aufgenommenen Fügekraft/Weg-Kennlinie von der Schar der Referenzkennlinien, insbesondere unter Einschluss des Toleranzbereichs.

2.  Verfahren gemäß einem der vorstehenden Ansprüche, wobei die Fügekraft zwischen zwei Komponenten durch Verschrauben aufgebracht wird und als Fügekraft/Weg-Kennlinie eine Drehmoment-/Drehwinkelkennlinie aufgenommen wird.

3.  Verfahren gemäß Anspruch 2, wobei die Fügekraft mittels einer Schraubvorrichtung auf die Schrauben aufgebracht wird und die Schraubvorrichtung die Drehmoment-/Drehwinkelkennlinie an eine Auswertevorrichtung ausgibt, welche die Drehmoment-/Drehwinkelkennlinie mit der Schar der Referenzkennlinien vergleicht.

4.  Verfahren gemäß Anspruch 1, wobei die Fügekraft direkt auf die zu fügenden Komponenten mittels einer Pressvorrichtung, insbesondere einer Fügepresse, aufgebracht wird.

5.  Verfahren gemäß einem der vorstehenden Ansprüche, wobei der vorbestimmte Wertebereich bzw. die Referenzkurvenschar durch empirische Messungen an dem gleichen Bauteiltyp ermittelt wird, wobei die Fügefläche sauber von Fremdkörpern ist und wobei die ermittelte Referenzkurvenschar bzw. der ermittelte Referenzwert den empirisch ermittelten Wertebereich sowie einen darüber hinausgehenden Toleranzbereich umfasst.

6.  Verfahren gemäß einem der vorstehenden Ansprüche, wobei der Schritt des Auslösens des Schritts zum Entfernen des Fremdkörpers die folgenden weiteren Schritte umfasst:

    - Lösen der Fügeverbindung,
    - Entfernen des Fremdkörpers, und
    - erneutes Fügen unter Verwendung des Verfahrens gemäß einem der vorstehenden Ansprüche.

7. Verfahren gemäß Anspruch 6, wobei der Fremdkörper durch Rütteln der Komponenten, Aneinanderschlagen der Komponenten, Ausblasen, Bürsten, Fluidbehandlung oder eine manuelle Entfernung entfernt wird.

8. Verfahren gemäß einem der vorstehenden Ansprüche, wobei der Gradient am Anfang und am Ende der Fügekraft/Weg-Kennlinie bestimmt wird, insbesondere in den unteren 20% der maximal aufgebrachten Fügekraft sowie den oberen 80% der maximal aufgebrachten Fügekraft.

9. Verfahren gemäß einem der vorstehenden Ansprüche, wobei das zu fügende Bauteil ein Bruchpleuel oder eine Bruchkreuzgelenkgabel ist.

10. Fügesystem zur Durchführung des Verfahrens gemäß einem der vorstehenden Ansprüche, wobei das zu fügende Bauteil ein Bruchpleuel oder eine Bruchkreuzgelenkgabel ist, umfassend:

   - eine Fügevorrichtung, welche eine Fügekraft/Weg-Kennlinie an eine Auswertevorrichtung ausgibt;
   - Auswertevorrichtung zum Vergleichen der Fügekraft/Weg-Kennlinie, die von der Fügevorrichtung ausgegeben wird, mit einer Referenzkurvenschar, wobei beim Vergleichen an einem ersten Messpunkt (2) ein erster Fügekraft-/Weggradient (dMu/dWu) bestimmt wird und an einem zweiten Messpunkt (3) ein zweiter Fügekraft-/Weggradient (dMo/dWo) bestimmt wird, dann ein Quotient aus den Gradienten gebildet wird und der Quotient mit einem aus der Referenzkurvenschar bestimmten Referenzwertebereich verglichen wird;
   - Ausgabevorrichtung zum Ausgeben einer Meldung oder zum Ausgeben eines Befehls zum Entfernen des Fremdkörpers.

11. Fügesystem gemäß Anspruch 10, wobei als Fügevorrichtung eine Schraubervorrichtung vorgesehen ist.

12. Schraubervorrichtung mit einer Schraubersteuerung, welche das Verfahren gemäß einem der Ansprüche 2-9, ausgenommen Anspruch 4, durchführt.

## Claims

1. Method for detecting foreign bodies, in particular inclusions, particles and/or impurities, when joining two fracture-split components (60, 62) into one structural member (6) at an interface, having the steps of:

   - joining the components by applying a joining force;
   - recording the joining force/distance characteristic curve during joining;
   - comparing the joining force/distance characteristic curve with a family of reference characteristic curves, in particular including a tolerance range, wherein during comparison at a first measuring point (2) a first joining force/distance gradient (dMu/dWu) is determined and at a second measuring point (3) a second joining force/distance gradient (dMo/dWo) is determined, then a quotient is formed from the gradients and the quotient is compared with a range of reference values determined from the family of reference curves;
   - commencing a step to remove the foreign bodies and/or to transmit a message on establishing a deviation of the joining force/distance characteristic curve recorded during joining, from the family of reference characteristic curves, in particular including the tolerance range.

2. Method according to any of the preceding claims, wherein the joining force between two components is applied by screwing and a torque/angle of rotation characteristic curve is recorded as the joining force/distance characteristic curve.

3. Method according to claim 2, wherein the joining force is applied to the screws by means of a screwing device and the screwing device transmits the torque/angle of rotation characteristic curve to an evaluating device which compares the torque/angle of rotation characteristic curve with the family of reference characteristic curves.

4. Method according to claim 1, wherein the joining force is applied directly to the components to be joined by means of a pressing device, in particular a joining press.

5. Method according to any of the preceding claims, wherein the predetermined range of values or the family of reference curves is determined by empirical measurements on the same type of structural member, wherein the joining surface is free from foreign bodies and wherein the family of reference curves or reference value which is determined covers the empirically determined range of values as well as a tolerance range which goes beyond it.

6. Method according to any of the preceding claims, wherein the step of commencing the step to remove the foreign body comprises the following further steps:

   - releasing the joining connection,
   - removing the foreign body, and
   - re-joining, using the method according to any of the preceding claims.

7. Method according to claim 6, wherein the foreign body is removed by vibrating the components, knocking the components against each other, blowing out, brushing, fluid treatment or manual removal.

8. Method according to any of the preceding claims, wherein the gradient is determined at the beginning and at the end of the joining force/distance characteristic curve, in particular in the bottom 20% of the maximally applied joining force and the top 80% of the maximally applied joining force.

9. Method according to any of the preceding claims, wherein the structural member to be joined is a fracture-split connecting rod or a fracture-split universal joint yoke.

10. Joining system for carrying out the method according to any of the preceding claims, wherein the structural member to be joined is a fracture-split connecting rod or a fracture-split universal joint yoke, comprising:

    - a joining device which transmits a joining force/distance characteristic curve to an evaluating device;
    - evaluating device for comparing the joining force/distance characteristic curve which is transmitted by the joining device, with a family of reference curves, wherein during comparison at a first measuring point (2) a first joining force/distance gradient (dMu/dWu) is determined and at a second measuring point (3) a second joining force/distance gradient (dMo/dWo) is determined, then a quotient is formed from the gradients and the quotient is compared with a range of reference values determined from the family of reference curves;
    - transmitting device for transmitting a message or transmitting an order to remove the foreign body.

11. Joining system according to claim 10, wherein a screwdriver or spanner device is provided as the joining device.

12. Screwdriver or spanner device having a screwdriver or spanner control which carries out the method according to any of claims 2-9, except claim 4.

**Revendications**

1. Procédé de détection de corps étrangers, notamment inclusions, particules et/ou impuretés, au niveau d'une surface de séparation lors de l'assemblage de deux éléments obtenus par fracture (60, 62) pour former une pièce (6), comprenant les étapes suivantes :

   - assemblage des éléments par application d'une force d'assemblage ;
   - enregistrement de la courbe caractéristique force d'assemblage / course lors de l'assemblage ;
   - comparaison de la courbe caractéristique force d'assemblage / course à un ensemble de courbes caractéristiques de référence, notamment en tenant compte d'une plage de tolérance, la comparaison s'effectuant de telle sorte qu'un premier gradient force d'assemblage / course (dMu / dWu) est déterminé en un premier point de mesure (2) et qu'un second gradient force d'assemblage / course (dMo / dWo) est déterminé en un second point de mesure (3) puis qu'un quotient est formé à partir des gradients et que le quotient est comparé à une plage de valeurs de référence déterminée à partir de l'ensemble de courbes de référence ;
   - déclenchement d'une étape destinée à l'élimination des corps étrangers et/ou à la délivrance d'un avertissement lorsqu'un écart est constaté entre la courbe caractéristique force d'assemblage/course enregistrée lors de l'assemblage et l'ensemble des courbes caractéristiques de référence, notamment en tenant compte de la plage de tolérance.

2. Procédé selon l'une des revendications précédentes, selon lequel on applique la force d'assemblage entre les deux éléments par vissage et selon lequel on enregistre comme courbe caractéristique force d'assemblage / course une courbe caractéristique couple / angle de rotation.

**3.** Procédé selon la revendication 2, selon lequel la force d'assemblage est appliquée sur les vis au moyen d'un dispositif de vissage et selon lequel le dispositif de vissage fournit la courbe caractéristique couple/angle de rotation à un dispositif d'évaluation qui compare la courbe caractéristique couple/angle de rotation à l'ensemble des courbes caractéristiques de référence.

**4.** Procédé selon la revendication 1, selon lequel la force d'assemblage est appliquée directement sur les éléments à assembler au moyen d'un dispositif de pression, notamment d'une presse d'assemblage.

**5.** Procédé selon l'une des revendications précédentes, selon lequel la plage de valeurs prédéterminée ou l'ensemble de courbes de référence est déterminé par des mesures empiriques sur le même type de pièce, la surface d'assemblage étant propre c'est-à-dire sans corps étranger et l'ensemble de courbes de référence déterminé ou la valeur de référence déterminée comprenant la plage de valeurs déterminée de façon empirique ainsi qu'une plage de tolérance allant au-delà.

**6.** Procédé selon l'une des revendications précédentes, selon lequel l'étape du déclenchement de l'étape destinée à l'élimination du corps étranger comprend les étapes suivantes :

- séparation de l'assemblage,
- élimination du corps étranger et
- nouvel assemblage en utilisant le procédé selon l'une des revendications précédentes.

**7.** Procédé selon la revendication 6, selon lequel le corps étranger est éliminé en secouant les éléments, en tapant les éléments l'un contre l'autre, en soufflant, en brossant, en envoyant un fluide ou en éliminant de façon manuelle.

**8.** Procédé selon l'une des revendications précédentes, selon lequel le gradient est déterminé au début et à la fin de la courbe caractéristique force d'assemblage/course, notamment dans les 20 % inférieurs de la force d'assemblage maximale appliquée ainsi que dans les 80 % supérieurs de la force d'assemblage maximale appliquée.

**9.** Procédé selon l'une des revendications précédentes, selon lequel la pièce à assembler est une bielle brisée ou une fourchette de joint de cardan brisée.

**10.** Système d'assemblage pour la mise en oeuvre du procédé selon l'une des revendications précédentes, la pièce à assembler étant une bielle brisée ou une fourchette de joint de cardan brisée, comprenant :

- un dispositif d'assemblage qui envoie une courbe caractéristique force d'assemblage / course à un dispositif d'évaluation ;
- un dispositif d'évaluation pour comparer la courbe caractéristique force d'assemblage / course qui est envoyée par le dispositif d'assemblage à un ensemble de courbes de référence, la comparaison s'effectuant de telle sorte qu'un premier gradient force d'assemblage/course (dMu / dWu) est déterminé en un premier point de mesure (2) et qu'un second gradient force d'assemblage / course (dMo / dWo) est déterminé en un second point de mesure (3) puis qu'un quotient est formé à partir des gradients et que le quotient est comparé à une plage de valeurs de référence déterminée à partir de l'ensemble de courbes de référence ;
- un dispositif de délivrance pour la délivrance d'un avertissement ou pour la délivrance d'une instruction demandant l'élimination du corps étranger.

**11.** Système d'assemblage selon la revendication 10, un dispositif de vissage étant prévu comme dispositif d'assemblage.

**12.** Dispositif de vissage comportant une commande de vissage, qui met en oeuvre le procédé selon l'une des revendications 2 à 9, à l'exception de la revendication 4.

## Fig. 1

Parameter
MD-Min: 100,0 Nm
MD-Max: 440,0 Nm
WI-Min: 88 Grd
WI-Max: 92 Grd
MS: 200,0 Nm

## Fig. 2

Parameter
MD-Min: 100,0 Nm
MD-Max: 440,0 Nm
WI-Min: 88 Grd
WI-Max: 92 Grd
MS: 200,0 Nm

## Fig. 3

Parameter
MD-Min: 100,0 Nm
MD-Max: 440,0 Nm
WI-Min: 88 Grd
WI-Max: 92 Grd
MS: 200,0 Nm

## Fig. 4

Parameter
MD-Min: 100,0 Nm
MD-Max: 440,0 Nm
WI-Min: 88 Grd
WI-Max: 92 Grd
MS: 200,0 Nm

# Fig. 5

Parameter
MD-Min: 100,0 Nm
MD-Max: 440,0 Nm
WI-Min: 88 Grd
WI-Max: 92 Grd
MS: 200,0 Nmc

# Fig. 6

Parameter
MD-Min: 100,0 Nm
MD-Max: 440,0 Nm
WI-Min: 88 Grd
WI-Max: 92 Grd
MS: 200,0 Nm

## Fig. 7

Parameter
MD-Min: 100,0 Nm
MD-Max: 440,0 Nm
WI-Min: 88 Grd
WI-Max: 92 Grd
MS: 200,0 Nm

## Fig. 8

Parameter
MD-Min: 100,0 Nm
MD-Max: 440,0 Nm
WI-Min: 88 Grd
WI-Max: 92 Grd
MS: 200,0 Nm

## Fig. 9

## Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2001162548 A